# EUROPÄISCHE PATENTANMELDUNG

(11) **EP 4 763 872 A1**
(43) Veröffentlichungstag der Anmeldung: **24.06.2026**
(21) Anmeldenummer: 24221856.8
(22) Anmeldetag: 19.12.2024
(51) Int. Cl.: C08F 8/12, C08F 8/30, C08F 212/08

(54) **VERFAHREN ZUR HERSTELLUNG VON AMIDOMETHYLIERTEN, VINYLAROMATISCHEN POLYMERISATEN**

(71) Anmelder: LANXESS Deutschland GmbH, 50569 Köln (DE)
(72) Erfinder: KOOP, Bernd, 50668 Köln (DE); VANHOORNE, Pierre, 40789 Monheim (DE)

(57) **Zusammenfassung**

Die Erfindung betrifft ein Verfahren zur Herstellung von amidomethylierten, vinylaromatischen Polymerisaten.

## Beschreibung

Die Erfindung betrifft ein Verfahren zur Herstellung von amidomethylierten, vinylaromatischen Polymerisaten.

Die WO-A 2024132644 offenbart ein Verfahren, bei dem die Amidomethylierung eines vinylaromatischen Polymerisates mit Phthalimid, Paraformaldehyd und einer Protonensäure in Gegenwart von flüssigem Schwefeldioxid in einem Eintopfverfahren durchgeführt wird. Nachteilig an diesem Verfahren ist, dass die amidomethylierten, vinylaromatischen Polymerisate bei der Umsetzung zum aminomethylierten, vinylaromatischen Polymerisat zu einem hohen Anteil strukturell zerfallen.

Es bestand daher das Bedürfnis nach einem Verfahren, das die Nachteile des Standes der Technik überwindet und mit dem aminomethylierte, vinylaromatische Polymerisate in guten Ausbeuten und hoher Stabilität hergestellt werden können.

Es wurde nun überraschend gefunden, dass die Umsetzung vinylaromatischer Polymerisate mit N-Hydroxymethylimiden und Protonensäuren in Gegenwart von Schwefeldioxid zu amidomethylierten, vinylaromatischen Polymerisaten führt, die ohne großen Zerfall der Polymerisate zu aminomethylierten, vinylaromatischen Polymerisaten umgesetzt werden können.

Gegenstand der vorliegenden Erfindung ist daher ein Verfahren zur Herstellung amidomethylierter, vinylaromatischer Polymerisate bei dem mindestens ein vinylaromatisches Polymerisat mit mindestens einer Verbindung der Formel (I) oder deren Salze 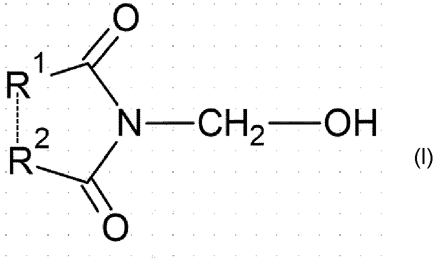 wobei R¹ = -C(H(C₁-C₆-Alkyl))- oder -CH₂- und R² = -C(H(C₁-C₆-Alkyl))- oder -CH₂- oder R¹ und R² sind zwei Kohlenstoffatome eines gegebenenfalls durch ein oder zwei C₁-C₆-Alkylreste substituierten aromatischen C₆-Ringes oder R¹ und R² stehen jeweils für -CH=, in Gegenwart mindestens einer Protonensäure und in Gegenwart von Schwefeldioxid umgesetzt wird.

R¹ und R² stellen bevorzugt gemeinsam einen ggf. durch einen C₁-C₆-Alkyl substituierten aromatischen C₆-Ring dar. Besonders bevorzugt stellen R¹ und R² den vicinalen Rest eines Benzolringes dar, welcher gegebenenfalls durch C₁-C₄-Alkyl substituiert ist. Ganz besonders bevorzugt stellen Verbindungen der Formel (I) N-Hydroxymethylphthalimid, N-Hydroxymethylsuccinimid oder N-Hydroxymethylmaleinimid dar. Noch weiter bevorzugt ist die Verbindung der Formel (I) N-Hydroxymethylphthalimid. Bei Verwendung von N-Hydroxymethylphthalimid werden erfindungsgemäß phthalimidomethylierte Polymerisate hergestellt. Als Salze der Verbindungen der Formel (I) werden vorzugsweise Additionsprodukte anorganischer oder organischer Laugen mit Verbindungen der Formel (I), wie, vorzugsweise Ammoniumsalze und Alkali- oder Erdalkalimetallsalze verstanden. Falls Salze eingesetzt werden, werden besonders bevorzugt die Natrium- und Kaliumsalze der Verbindungen der Formel (I) eingesetzt.

C₁-C₆-Alkyl bzw. C₁-C₄-Alkyl stehen im Rahmen der Erfindung für einen geradkettigen oder verzweigten oder zyklischen Alkylrest mit 1 bis 6 bzw. mit 1 bis 4 Kohlenstoffatomen. Beispielhaft und vorzugsweise steht C₁-C₆-Alkyl für Methyl, Ethyl, n-Propyl, Isopropyl, n-, i-, s- oder t-Butyl, Cyclopropyl, , 1-Methylbutyl.

Beispielhaft und vorzugsweise steht C₁-C₄-Alkyl für Methyl, Ethyl, n-Propyl und Isopropyl.

Bevorzugt wird die Reaktion in Gegenwart von flüssigem Schwefeldioxid durchgeführt. Es können aber auch Gemische aus Schwefeldioxid und weiteren Quellungsmitteln eingesetzt werden.

Schwefeldioxid stellt ein Quellungsmittel für die Polymerisate dar, dient aber ebenfalls als Lösungsmittel für die weiteren Edukte der Amidomethylierungsreaktion. Bei der Amidomethylierungsreaktion können auch weitere organische Quellungsmittel zugesetzt werden. Als weitere organische Quellungsmittel können z.B. und vorzugsweise Benzotrifluorid, Dibrommethan, 1,2-Dichlorethan, 1,2-Dichlorpropan, 1,3-Dichlorpropan, 1,4-Dichlorbutan, 1,6-Dichlorhexan, Methylenchlorid, Tetrachlorkohlenstoff, Trichlorethan, Chlorbenzol, 1,2-Dichlorbenzol, Kohlendioxid oder Nitro- substituierte Kohlenwasserstoffe, wie z.B. Nitropropan, Nitrobenzol oder z.B. cyclische Kohlenwasserstoffe, wie z.B. Cyclohexan und Methylcyclohexan zugesetzt werden. Bevorzugt werden keine weiteren Quellungsmittel oder/und Lösungsmittel eingesetzt.

Bevorzugt ist die Gewichtsmenge von Schwefeldioxid an den eingesetzten Quellungsmitteln 80 bis 100 Gew.-%. Besonders bevorzugt ist die Gewichtsmenge von Schwefeldioxid an den eingesetzten Quellungsmitteln 90 bis 100 Gew.-%. Ganz besonders bevorzugt ist die Gewichtsmenge von Schwefeldioxid an den eingesetzten Quellungsmitteln 98 bis 100 Gew.-%.

Als Protonensäuren können beispielsweise anorganische oder organische Protonensäuren eingesetzt werden. Als anorganische Protonensäuren werden beispielsweise Salzsäure, Schwefelsäure, Oleum, Salpetersäure, salpetrige Säure, schwefelige Säure, aliphatische oder aromatische Methan-, Benzol,- oder Toluolsulfonsäuren oder Phosphorsäure eingesetzt. Als organische Protonensäuren können z.B. Oxalsäure, Essigsäure oder Ameisensäure eingesetzt werden. Bevorzugt werden anorganische Protonensäuren eingesetzt. Besonders bevorzugt werden als Protonensäuren Schwefelsäure oder Oleum eingesetzt.

Die erfindungsgemäß hergestellten Polymerisate sind vorzugsweise kugelförmig. Die Polymerisate haben vorzugsweise einen Durchmesser von 200 bis 1000 µm. Kugelförmige Polymerisate werden als Perlpolymerisate bezeichnet.

Der Begriff vinylaromatisch im Sinne der Erfindung umfasst polyvinylaromatische und monovinylaromatische Monomere. Zur Herstellung der vinylaromatischen Polymerisate wird beispielsweise mindestens eine monovinylaromatische Verbindung und mindestens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen. Bevorzugt werden zur Herstellung der vinylaromatischen Polymerisate mindestens eine monovinylaromatische Verbindung und mindestens eine polyvinylaromatische Verbindung eingesetzt.

Als monovinylaromatische Verbindungen im Sinne der vorliegenden Erfindung werden bevorzugt Styrol, Vinyltoluol, Ethylstyrol, α-Methylstyrol, Chlorstyrol und Chlormethylstyrol eingesetzt.

Besonders bevorzugt wird Styrol oder Mischungen aus Styrol mit den vorgenannten Monomeren eingesetzt.

Die monovinylaromatischen Verbindungen werden vorzugsweise in Mengen von größer oder gleich 80 Gew.-%, weiter bevorzugt von 80 bis 99 -Gew.-% bezogen auf die Gewichtsmenge an Monomeren eingesetzt.

Bevorzugte polyvinylaromatische Verbindungen im Sinne der vorliegenden Erfindung sind Divinylbenzol, Divinyltoluol, Trivinylbenzol, Triallylisocyanurat, Divinylnaphthalin oder Trivinylnaphthalin.

Die polyvinylaromatischen Verbindungen werden vorzugsweise in Mengen von 1 bis 20 Gew.-%, besonders bevorzugt in Mengen von 2 bis 12 Gew.-%, ganz besonders bevorzugt 4 bis 10 Gew.-%, bezogen auf die Gewichtsmenge an Monomeren eingesetzt. Die Art der polyvinylaromatischen Verbindungen (Vernetzer) wird im Hinblick auf die spätere Verwendung des Polymerisates ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform sind die vinylaromatischen Polymerisate Styrol-Divinylbenzol vernetzte Copolymerisate.

In einer bevorzugten Ausführungsform der vorliegenden Erfindung kommen mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise und vorzugsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente, beispielsweise ein Isocyanat oder ein Säurechlorid, mit einer zweiten, in der wässrigen Phase gelösten Reaktivkomponente, beispielsweise einem Amin, zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind vorzugsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azo-bis(isobutyronitril) oder 2,2'-Azobis(2-methylisobutyronitril). Ganz besonders bevorzugt wird Dibenzoylperoxid eingesetzt.

Die Initiatoren werden vorzugsweise in Mengen von 0,05 bis 2,5 Gew.-%, besonders bevorzugt in Mengen von 0,1 bis 1,5 Gew.-%, bezogen auf die Monomeren-Mischung, angewendet.

Als weitere Zusätze in den gegebenenfalls mikroverkapselten Monomertröpfchen können gegebenenfalls Porogene verwendet werden, um im Polymerisat eine makroporöse Struktur zu erzeugen. Hierfür sind organische Lösungsmittel geeignet, die das entstandene Polymerisat schlecht lösen bzw. quellen. Vorzugsweise seien Hexan, Octan, Isooctan, Isododecan, Methylethylketon, Butanol oder Octanol und deren Isomeren genannt. Besonders bevorzugt wird Isododecan als Porogen eingesetzt. Bevorzugt werden Porogene bei der Herstellung der erfindungsgemäßen amidomethylierten, vinylaromatischen Polymerisate eingesetzt.

Die Begriffe mikroporös oder gelförmig bzw. makroporös sind in der Fachliteratur bereits eingehend beschrieben worden.

Bevorzugte Polymerisate im Sinne der vorliegenden Erfindung weisen eine makroporöse Struktur auf.

Makroporös im Sinne der Erfindung bedeutet vorzugsweise, dass der mittlere Durchmesser der Poren im Polymerisat ≥ 25 nm ist. Besonders bevorzugt weisen die Poren im Polymerisat der makroporösen Polymerisate einen mittleren Durchmesser von 30 nm bis 1000 nm auf. Ganz besonders bevorzugt weisen die Poren im Polymerisat der makroporösen Polymerisate einen mittleren Durchmesser von 30 nm bis 100 nm auf.

Gelförmig im Sinne der Erfindung bedeutet, dass die BET-Oberfläche ≤ 2 m²/g ist. Vorzugsweise ist die BET-Oberfläche bei gelförmigen Polymerisaten 0,02 m²/g bis 2 m²/g.

Vorzugsweise ist die BET-Oberfläche bei makroporösen Polymerisaten ≥ 20m²/g.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Polymerisate können in heterodisperser oder monodisperser Form hergestellt werden. Die Herstellung heterodisperser Polymerisate geschieht nach allgemeinen, dem Fachmann bekannten Verfahren, z.B. mit Hilfe der Suspensionspolymerisation.

Bevorzugt werden monodisperse, vinylaromatische Polymerisate im erfindungsgemäßen Verfahren hergestellt.

Als monodispers werden in der vorliegenden Anmeldung solche Stoffe bezeichnet, bei dem mindestens 90 Volumen- oder Massen-%, vorzugsweise 90 Volumen-%, der Teilchen einen Durchmesser besitzen, der in dem Intervall mit der Breite von +/- 10% des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Das monodisperse Polymerisat kann nach den aus der Literatur bekannten Verfahren hergestellt werden. Bei der Herstellung von monodispersen, vinylaromatischen Polymerisaten kann die wässrige Phase gegebenenfalls einen gelösten Polymerisationsinhibitor enthalten. Bevorzugt enthält die wässrige Phase einen gelösten Polymerisationsinhibitor. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitro-sophenylhydroxylamin-Ammoniumsalz oder N-Nitrosophenylhydroxylamin-Aluminiumsalz. Die Konzentration des Inhibitors beträgt vorzugsweise 5 bis 1000 ppm bezogen auf die wässrige Phase, besonders bevorzugt 10 bis 500 ppm und noch weiter bevorzugt 10 bis 250 ppm. Bevorzugt wird Resorcin als Polymerisationsinhibitor eingesetzt. Bevorzugt wird ein Polymerisationsinhibitor eingesetzt.

Die Polymerisation der gegebenenfalls mikroverkapselten Monomertröpfchen zum monodispersen, vinylaromatischen Polymerisat erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine und wird bevorzugt eingesetzt. Die Einsatzmenge der Schutzkolloide beträgt vorzugsweise 0,05 bis 1 Gew.-% bezogen auf die wässrige Phase, besonders bevorzugt 0,05 bis 0,5 Gew.-%.

Die Polymerisation zum monodispersen, vinylaromatischen Polymerisat kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise von 13 bis 8, einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt vorzugsweise 0,5 bis 500 mmol/l, besonders bevorzugt 2,5 bis 100 mmol/l.

Die Rührgeschwindigkeit bei der Polymerisation ist weniger kritisch und hat keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt vorzugsweise 1:0,75 bis 1:20, besonders bevorzugt 1:1 bis 1:6.

Die Polymerisationstemperatur richtet sich nach der Zerfallstemperatur des eingesetzten Initiators. Sie liegt vorzugsweise zwischen 50 bis 180°C, besonders bevorzugt zwischen 55 und 130°C. Die Polymerisation dauert vorzugsweise 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, vorzugsweise durch Filtrieren oder Dekantieren, isoliert und gegebenenfalls gewaschen.

Das vinylaromatische Polymerisat wird mit mindestens einer Verbindung der Formel (I) in Gegenwart von Schwefeldioxid und in Gegenwart mindestens einer Protonensäure zum amidomethylierten, vinylaromatischen Polymerisat umgesetzt.

Das vinylaromatische Polymerisat kann beispielsweise zunächst aufgequollen werden, beispielsweise auch in Gegenwart anderer Quellungsmittel als Schwefeldioxid und in diesem Zustand mit einer Mischung aus den Verbindungen der Formel (I), dem Schwefeldioxid und den Protonensäuren vermischt werden. Genauso könnten aber zunächst die Verbindungen der Formel (I) zu dem vernetzten Polymerisat in Gegenwart von Schwefeldioxid hinzugegeben werden und danach dann die Protonensäuren hinzugefügt werden. Oder man legt zunächst die Verbindungen der Formeln (I) und das vinylaromatische Polymerisat vor, fügt das Schwefeldioxid dazu und gibt dann die Protonensäure hinzu. Oder man legt zunächst die Verbindungen der Formeln (I) und das Schwefeldioxid vor, fügt die Protonensäure dazu und gibt dann das vinylaromatische Polymerisat hinzu.

In einer bevorzugten Ausführungsform der Erfindung wird zunächst das vinylaromatische Polymerisat und die Verbindungen der Formel (I) vorgelegt. Danach wird das Schwefeldioxid, vorzugsweise in flüssigem Zustand hinzugegeben. Vorzugsweise erfolgt die Zugabe durch Pumpen des Schwefeldioxids in den Reaktor. Dabei wird vorzugsweise der Druck erhöht und das Schwefeldioxid wieder in die flüssige Form überführt. Dann wird vorzugsweise die Temperatur erhöht. Dann wird vorzugsweise die Protonensäure hinzugefügt. Die Abtrennung des Schwefeldioxids erfolgt vorzugsweise durch Reduktion des Druckes, bevorzugt auf Normaldruck. Bevorzugt wird das abgetrennte Schwefeldioxid in einem weiteren Behälter aufgefangen und kann dann wieder verwendet werden.

Bevorzugt wird die Reaktionsmischung erwärmt. Die Reaktion wird vorzugsweise ohne Abtrennung von entstehenden Zwischenprodukten aus der Reaktionslösung durchgeführt. Die Aufarbeitung der Reaktionsprodukte erfolgt nach dem Fachmann bekannten Verfahren.

Vorzugsweise beträgt das Gewichtsverhältnis des Schwefeldioxids zu dem vinylaromatischen Polymerisat 15:1 bis 2:1. Besonders bevorzugt beträgt das Gewichtsverhältnis des Schwefeldioxids zu dem vinylaromatischen Polymerisat 12:1 bis 3:1.

Das Stoffmengenverhältnis der aromatischen Gruppen im vinylaromatischen Polymerisat zu den Verbindungen der Formel (I) beträgt vorzugsweise 0,2:1 bis 2,5:1. Besonders bevorzugt beträgt das Stoffmengenverhältnis der aromatischen Gruppen im vinylaromatischen Polymerisat zu den Verbindungen der Formel (I) 0,5:1 bis 1,8:1. Ganz besonders bevorzugt beträgt das Stoffmengenverhältnis der aromatischen Gruppen im vinylaromatischen Polymerisat zu den Verbindungen der Formel (I) 0,7:1 bis 1,6:1.

Das Stoffmengenverhältnis der Verbindungen der Formel (I) zu der eingesetzten Protonensäure beträgt vorzugsweise zwischen 10:1 bis 1:10. Besonders bevorzugt beträgt das Stoffmengenverhältnis der Verbindungen der Formel (I) zu der eingesetzten Protonensäure 1:1 bis 1:10. Noch weiter bevorzugt beträgt das Stoffmengenverhältnis der Verbindungen der Formel (I) zu der eingesetzten Protonensäure 1:1 bis 1:3.

Falls als Protonensäure Schwefelsäure eingesetzt wird, dann beträgt die Konzentration der eingesetzten Schwefelsäure vorzugsweise 70 bis 100 Gew.-%. Noch weiter bevorzugt beträgt die Konzentration der eingesetzten Schwefelsäure 90 bis 100 Gew.-%.

Die Reaktionstemperatur für die Umsetzung der vinylaromatischen Polymerisate zu den amidomethylierten, vinylaromatischen Polymerisaten beträgt vorzugsweise 0°C bis 130 °C. Die Reaktion wird vorzugsweise bei einem Druck und einer Temperatur durchgeführt, bei der die Lösungsmittel flüssig sind. Falls die Reaktion in Gegenwart von Schwefeldioxid durchgeführt wird, liegt der Druck bevorzugt bei 4 bis 20 bar. Die Reaktionstemperatur beträgt bevorzugt 30°C bis 90°C.

Die amidomethylierten, vinylaromatischen Polymerisate sind insbesondere bedeutsame Zwischenprodukte für die Herstellung von Ionenaustauschern und Chelatharzen. So lassen sich beispielsweise aus den, nach dem erfindungsgemäßen Verfahren hergestellten amidomethylierten, vinylaromatischen Polymerisaten, Ionenaustauscher, insbesondere Anionenaustauscher und Chelatharze herstellen.

Bevorzugt wird das amidomethylierte, vinylaromatische Polymerisat in einem weiteren Schritt zu aminomethylierten, vinylaromatischen Polymerisaten umgesetzt. Daraus können dann die Ionenaustauscher und Chelatharze nach bekannten Verfahren hergestellt werden.

Bevorzugt erfolgt die Umsetzung mit mindestens einem Alkali- oder Erdalkalimetalhydroxid oder Gemischen dieser Verbindungen, besonders bevorzugt mit Alkalimetallhydroxiden, wie insbesondere Natriumhydroxid oder Kaliumhydroxid oder Gemischen dieser Verbindungen. Besonders bevorzugt verläuft die Umsetzung in Gegenwart einer wässrigen oder alkoholischen Lösung eines Alkalimetallhydroxides. Die Konzentration des Alkali- oder Erdalkalimetallhydroxides, vorzugsweise wird Natronlauge eingesetzt, liegt im Bereich von 10 bis 60 Gew.-%, vorzugsweise 10 bis 40 Gew.-%. Die Umsetzung zum aminomethylierten, vinylaromatischen Polymerisat erfolgt vorzugsweise bei Temperaturen von 100°C bis 250°C, besonders bevorzugt bei Temperaturen von 120°C bis 190°C. In einer weiteren bevorzugten Ausführungsform der Erfindung wird das amidomethylierte, vinylaromatische Polymerisat in Gegenwart von einem oder mehreren Alkali- oder Erdalkalimetallhydroxiden für einen Zeitraum von 6 bis 10 Stunden bei Temperaturen von 100°C bis 250°C erwärmt.

Eine weitere erfindungsgemäße Ausführungsform ist ein Verfahren zur Herstellung aminomethylierter, vinylaromatischer Polymerisate, bei dem in einem ersten Schritt a.) mindestens ein vinylaromatisches Polymerisat mit mindestens einer Verbindung der Formel (I) oder deren Salze 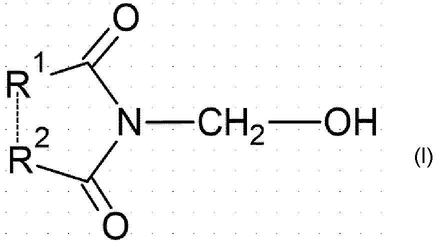 wobei R¹ = -C(H(C₁-C₆-Alkyl))- oder -CH₂- und R² = -C(H(C₁-C₆-Alkyl))- oder -CH₂- oder R¹ und R² sind zwei Kohlenstoffatome eines gegebenenfalls durch ein oder zwei C₁-C₆-Alkylreste substituierten aromatischen C₆-Ringes oder R¹ und R² stehen jeweils für -CH=,
in Gegenwart mindestens einer Protonensäure und
in Gegenwart von Schwefeldioxid zu einem amidomethylierten, vinylaromatischen Polymerisat umgesetzt wird und
in einem Schritt b.) das amidomethylierte, vinylaromatischen Polymerisat aus Schritt a.) mit mindestens einem Alkali- oder Erdalkalimetallhydroxid und
in Gegenwart von Wasser bei einer Temperatur von 100°C bis 250°C umgesetzt wird.

Das dabei entstehende aminomethylierte, vinylaromatische Polymerisat kann mit vollentsalztem Wasser alkalifrei gewaschen werden.

Das aminomethylierte, vinylaromatische Polymerisat kann mit weiteren Alkylierungsmitteln zu Anionenaustauschern oder Chelatharzen umgesetzt werden oder auch als lonenaustauscher verwendet werden.

Weiterhin ist möglich, die erfindungsgemäßen aminomethylierten, vinylaromatischen Polymerisate mit Halomethylstickstoffheterocyclen, wie z.B. 2-Chlormethylpyridin, 3-Chlormethylpyridin oder 4-Chlormethylpyridin umzusetzen und dadurch Chelatharze herzustellen.

Mit der vorliegenden Erfindung wird ein neues Herstellungsverfahren für amidomethylierte, vinylaromatische Polymerisate zur Verfügung gestellt, mit der diese, insbesondere phthalimidomethylierte Polymerisate und aminomethylierte Polymerisate, unter Berücksichtigung ökologischer Gesichtspunkte, in hoher Ausbeute und mit hoher Stabilität, hergestellt werden können.

### Beispiel 1

### 1.1 Herstellung des monodispersen, makroporösen Polymerisates auf der Basis von Styrol, Divinylbenzol und Ethylstyrol

In einem 10 I Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g mikroverkapselter Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan), wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet.

Man erhält 1893 g eines Polymerisates mit enger Teilchengrößenverteilung. Der mittlere Durchmesser der Poren im Polymer beträgt 42 nm.

### 1.2. Herstellung eines phthalimidomethylierten, monodispersen, makroporösen Polymerisates mit dem Quellungsmittel Schwefeldioxid

In einem Autoklaven werden 53,1 g Polymerisat aus Beispiel 1.1 und 93,0 g (0,525 mol) N-Hydroxymethylphthalimid (177,2 g/mol) vorgelegt. Anschließend wird der Autoklav evakuiert, es werden 600 g Schwefeldioxid (64 g/mol) zugegeben und der Autoklav verschlossen. Es wird 60 min bei Raumtemperatur gerührt und anschließend werden bei 40°C innerhalb von 60 min 103 g (1,05 mol) Schwefelsäure (100 Gew.-%, 98,1 g/mol) zugetropft. Im Anschluss daran wird 6 h bei 50°C gerührt, der Druck liegt bei ca. 7,0 bar. Unter diesen Bedingungen liegt das Schwefeldioxid zu einem hohen Anteil in einem flüssigen Zustand bei der Reaktion vor. Zur Aufarbeitung werden die Perlen nacheinander mit 78 Gew.-% und 50 Gew.-% Schwefelsäure und anschließend mit Wasser, Aceton und Wasser gewaschen.

### Volumenausbeute: 275 ml

### Stickstoffgehalt (nach Trocknung): 5,4 Gew.-%

### 1.3. Herstellung eines aminomethylierten, vinylaromatischen, monodispersen, makroporösen Polymerisates

Bei Raumtemperatur werden in einem Autoklaven 250 ml voll entsalztes Wasser und 95 g einer 50 Gew.-%igen Natronlauge vorgelegt. Unter Rühren werden 250 ml Harz hergestellt nach Beispiel 1.2. dosiert.

Die Suspension wird auf 180°C erhitzt und weitere 8 Stunden bei dieser Temperatur gerührt. Danach wird die Suspension abgekühlt. Das erhaltene kugelförmige Polymerisat wird über ein Sieb abgetrennt und mit voll entsalztem Wasser neutral gewaschen.

### Volumenausbeute : 212 ml

### Ganze Perlen: 99%

Das kugelförmige Polymerisat bleibt nach der Hydrolyse zum aminomethylierten Polymerisat stabil, so dass 99 % des Polymerisates in kugelförmigen Zustand erhalten bleiben.

### Beispiel 2 (Vergleichsbeispiel)

### (nicht erfindungsgemäß)

### 2.1 Herstellung eines phthalimidomethylierten, monodispersen, makroporösen Perlpolymerisates mit Phthalimid

In einem Autoklaven werden 53,1 g Polymerisat aus Beispiel 1.1, 77,2 g (0,525 mol) Phthalimid (147,13 g/mol) und 16,4 g (0,525 mol) Paraformaldehyd (30,03 g/mol (n = 8 bis 30)) vorgelegt. Anschließend wird der Autoklav evakuiert, es werden 600 g Schwefeldioxid (64 g/mol) zugegeben und der Autoklav verschlossen. Es wird 60 min bei Raumtemperatur gerührt und anschließend werden bei 40°C innerhalb von 60 min 103 g (1,05 mol) Schwefelsäure (100 Gew.-%, 98,1 g/mol) zugetropft. Im Anschluss daran wird 6 h bei 50°C gerührt, der Druck liegt bei ca. 7,1 bar. Unter diesen Bedingungen liegt das Schwefeldioxid zu einem hohen Anteil in einem flüssigen Zustand bei der Reaktion vor. Zur Aufarbeitung werden die Perlen nacheinander mit 78 Gew.-% und 50 Gew.-% Schwefelsäure und anschließend mit Wasser, Aceton und Wasser gewaschen.

### Volumenausbeute: 310 ml

### Stickstoffgehalt (nach Trocknung): 5,4 Gew.-%

### 2.2 Herstellung eines aminomethylgruppenhaltigen monodispersen, makroporösen Polymerisates

Bei Raumtemperatur werden in einem Autoklaven 268 ml voll entsalztes Wasser und 118 g einer 50 Gew.-%igen Natronlauge vorgelegt. Unter Rühren werden 250 ml Harz hergestellt nach Beispiel 2.1 dosiert.

Die Suspension wird auf 180 °C erhitzt und weitere 8 Stunden bei dieser Temperatur gerührt. Danach wird die Suspension abgekühlt. Das erhaltene kugelförmige Polymerisat wird über ein Sieb abgetrennt und mit voll entsalztem Wasser neutral gewaschen.

### Volumenausbeute : 210 ml

### Ganze Perlen: 15%

Nur 15 % des kugelförmigen Polymerisates bleiben in kugelförmigen Zustand erhalten. Die übrigen Kugeln sind nicht stabil und zerbrechen zu kleinen Polymerstückchen.

## Patentansprüche

1. Verfahren zur Herstellung von amidomethylierten, vinylaromatischen Polymerisaten, **dadurch gekennzeichnet, dass** mindestens ein vinylaromatisches Polymerisat mit mindestens einer Verbindung der Formel (I) oder deren Salze 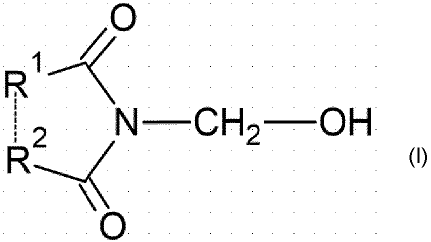
wobei R¹ = -C(H(C₁-C₆-Alkyl))- oder -CH₂- und R² = -C(H(C₁-C₆-Alkyl))- oder -CH₂- oder R¹ und R² sind zwei Kohlenstoffatome eines gegebenenfalls durch ein oder zwei C₁-C₆-Alkylreste substituierten aromatischen C₆-Ringes oder R¹ und R² stehen jeweils für -CH=
in Gegenwart mindestens einer Protonensäure und
in Gegenwart von Schwefeldioxid umgesetzt wird.

2. Verfahren gemäß Anspruch 1, **dadurch gekennzeichnet, dass** die Reaktion bei einem Druck von 4 bis 20 bar durchgeführt wird.

3. Verfahren gemäß einem der Ansprüche 1 oder 2, **dadurch gekennzeichnet, dass** die Reaktion bei einer Temperatur von 30°C bis 90°C durchgeführt wird.

4. Verfahren gemäß einem oder mehreren der Ansprüche 1 bis 3, **dadurch gekennzeichnet, dass** als Protonensäure Schwefelsäure eingesetzt wird.

5. Verfahren gemäß Anspruch 4, **dadurch gekennzeichnet, dass** die Konzentration der eingesetzten Schwefelsäure 90 bis 100 Gew.-% beträgt.

6. Verfahren gemäß einem oder mehreren der Ansprüche 1 bis 5, **dadurch gekennzeichnet, dass** als vinylaromatisches Polymerisat ein Styrol-Divinylbenzol Copolymerisat eingesetzt wird.

7. Verfahren gemäß einem oder mehreren der Ansprüche 1 bis 6, **dadurch gekennzeichnet, dass** als Verbindung der Formel (I) N-Hydroxymethylphthalimid eingesetzt wird.

8. Verfahren gemäß einem oder mehreren der Ansprüche 1 bis 7, **dadurch gekennzeichnet, dass** als vinylaromatisches Polymerisat ein monodisperses, vinylaromatisches Polymerisat eingesetzt wird.

9. Verfahren gemäß einem oder mehreren der Ansprüche 1 bis 8, **dadurch gekennzeichnet, dass** ein makroporöses, vinylaromatisches Polymerisat eingesetzt wird und die Poren einen Durchmesser von ≥ 25 nm aufweisen.

10. Verfahren gemäß einem oder mehreren der Ansprüche 1 bis 9, **dadurch gekennzeichnet, dass** das Gewichtsverhältnis von Schwefeldioxid zu dem vinylaromatischen Polymerisat 12:1 bis 3:1 beträgt.

11. Verfahren gemäß einem oder mehreren der Ansprüche 1 bis 10, **dadurch gekennzeichnet, dass** das Stoffmengenverhältnis der aromatischen Gruppen im vinylaromatischen Polymerisat zu den Verbindungen der Formel (I) 0,7:1 bis 1,6:1 beträgt.

12. Verfahren gemäß einem oder mehreren der Ansprüche 1 bis 11, **dadurch gekennzeichnet, dass** das Stoffmengenverhältnis der Verbindungen der Formel (I) zu der eingesetzten Protonensäure zwischen 1:1 bis 1:3 liegt.

13. Verfahren gemäß einem oder mehreren Ansprüchen 1 bis 12, **dadurch gekennzeichnet, dass** das amidomethylierte, vinylaromatischen Polymerisat in Gegenwart von mindestens einem Alkali- oder Erdalkalimetallhydroxid zu aminomethyliertem, vinylaromatischen Polymerisat umgesetzt wird.

14. Verfahren gemäß einem oder mehreren Ansprüchen 1 bis 13, **dadurch gekennzeichnet, dass** das amidomethylierte, vinylaromatischen Polymerisat in Gegenwart von mindestens einem Alkalimetallhydroxid und in Gegenwart von Wasser bei einer Temperatur von 100°C bis 250°C zu aminomethyliertem, vinylaromatischen Polymerisat umgesetzt wird.

15. Verfahren gemäß Anspruch 13 oder 14, **dadurch gekennzeichnet, dass** die Umsetzung in Gegenwart von Natriumhydroxid erfolgt.
